(19) Europäisches Patentamt / European Patent Office / Office européen des brevets

(11) **EP 2 803 944 B1**

(12) **EUROPEAN PATENT SPECIFICATION**

(45) Date of publication and mention
of the grant of the patent:
**17.08.2016 Bulletin 2016/33**

(51) Int Cl.:
*G01C 3/00* *(2006.01)*     *B60W 30/00* *(2006.01)*
*G06T 7/20* *(2006.01)*     *G08G 1/16* *(2006.01)*
*G01C 3/14* *(2006.01)*

(21) Application number: **14166000.1**

(22) Date of filing: **25.04.2014**

(54) **Image Processing Apparatus, Distance Measurement Apparatus, Vehicle-Device Control System, Vehicle, and Image Processing Program**

Bildverarbeitungvorrichtung, Abstandsmessvorrichtung, Fahrzeug-Vorrichtungs-Steuersystem, Fahrzeug, und Bildverarbeitungsprogramm

Appareil de traitement d'image, appareil de mesure de distance, système de commande de dispositif de véhicule, véhicule et programme de traitement d'images

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.05.2013 JP 2013101882**

(43) Date of publication of application:
**19.11.2014 Bulletin 2014/47**

(73) Proprietor: **Ricoh Company, Ltd.**
**Tokyo 143-8555 (JP)**

(72) Inventors:
 • **Saitoh, Kiichiroh**
   **Tokyo, 143-8555 (JP)**
 • **Aoki, Shin**
   **Tokyo, 143-8555 (JP)**
 • **Kikuchi, Naoki**
   **Tokyo, 143-8555 (JP)**
 • **Asaba, Junichiro**
   **Tokyo, 143-8555 (JP)**
 • **Yoshida, Jun**
   **Tokyo, 143-8555 (JP)**
 • **Yokota, Soichiro**
   **Tokyo, 143-8555 (JP)**
 • **Nagao, Kagehiro**
   **Tokyo, 143-8555 (JP)**

(74) Representative: **Schwabe - Sandmair - Marx Patentanwälte Rechtsanwalt Partnerschaft mbB Joseph-Wild-Straße 20 81829 München (DE)**

(56) References cited:
 **WO-A1-2012/086173**     **JP-A- 2000 331 148**

 • **SATYAJIT ANIL ADHYAPAK: "Stereo matching via selective multiple windows", JOURNAL OF ELECTRONIC IMAGING, vol. 16, no. 1, 1 January 2007 (2007-01-01), page 013012, XP055173451, ISSN: 1017-9909, DOI: 10.1117/1.2711817**
 • **Lin, Chuen-Horng, Cheng-Hsin Kuo, and Li-Jung Fu: "A Stereo Matching Algorithm Based on Adaptive Windows" In: "International Journal of Electronic Commerce Studies", 2012, XP002736810, vol. 3, pages 21-34, * sections 1 and 2 ***

**Description**

BACKGROUND

Technical Field

The present invention relates to an image processing apparatus, a distance measurement apparatus, a vehicle-device control system, a vehicle, and an image processing program, each of which computes and uses parallax between a target portion on a reference image and a corresponding portion on a comparing image captured as a plurality of images by using a plurality of image capturing units.

Background Art

Some image processing apparatus apparatuses are currently used for measuring distance to an object, and applied to vehicle control systems that control movement of movable bodies such as vehicles including automobiles, trains, ships, airplanes, robots or the like, and applied to information providing apparatuses that provide information to drivers of the vehicles. These image processing apparatuses are applied, for example, to driver support systems such as adaptive cruise control (ACC) to reduce the burden on drivers of the vehicles. The driver support systems provide various functions including an automatic brake-control-and-alert function that alerts the driver to take corrective action to avoid a collision or reduce the impact effect of the collision, a driving speed adjustment function to maintain a safe minimum distance between vehicles, and a stray prevention function to prevent the vehicle from straying into another lane. To effectively use these functions, distance to various target objects existing around the vehicle need to be recognized and detected with high precision by analyzing images captured ahead of the vehicle, wherein the various target objects are, for example, other vehicles, pedestrians, road objects (lanes, manhole covers), road-side objects (telegraph poles, guard rails, curbstones, median strips), lanes of vehicle, or the like.

JP-2000-331148-A discloses a three-dimensional shape measuring apparatus that can compute parallax of a target object using a first camera and a second camera, in which the first camera captures a reference image and the second camera captures a comparing image, and parallax of the target object is computed by comparing the reference image and the comparing image. In this three-dimensional shape measuring apparatus, a matching process is conducted by comparing the reference image and the comparing image. Specifically, a window (search target area) is set in the reference image, and a feature value such as change rate, matrix eigenvalue, variance in an image portion in the window is computed. Then, the matching process is conducted by searching a position of a window in the comparing image having the same or similar feature value of the window in the reference image, in which it is searched which part of an epipolar line in the comparing image has the matched window in the comparing image. With this matching process, one window in the comparing image can be identified.

A point corresponding to an object displayed at the center point of the identified window (corresponding portion) in the comparing image identified by this matching process is assumed as the same point where the same object displayed at the center point of the window (target portion for computing parallax) in the reference image, and a deviation amount between the center point in the reference image and the center point in the comparing image are compared to compute a parallax value. When the parallax, value is computed as above described, distance to the point of the object can be computed by using fundamental of triangulation.

In some cases of captured images, comparison between an image portion in the window set in the reference image and an image portion in each of windows on the epipolar line in the comparing image may not be conducted effectively if the image portion in the window set in the reference image does not have an effective feature value. In this case, it is difficult to distinguish a window in the comparing image displaying the same object, displayed in the window of the reference image, from other windows in the comparing image, and therefore, windows in the comparing image having the same or similar feature value of the window in the reference image may be detected at a plurality of portions on the epipolar line in the comparing image.

Resultantly, a window in the comparing image displaying an object entirely different from an object displayed in the window of the reference image, or a window in the comparing image displaying a different portion of the same object displayed in the window of the reference image may be erroneously matched (error matching). When the matching process cannot be conducted effectively, a suitable parallax value for a point of an object displayed at the center point of the window in the reference image (target portion for computing parallax) cannot be computed correctly.

In the three-dimensional shape measuring apparatus of JP-2000-331148-A, when the matching process is conducted, an image portion in the window set in the reference image is evaluated, and a window size used for the matching process can be changed based on an evaluation result. Specifically, a feature value such as change rate, matrix eigenvalue, variance of the image portion in the window is computed, and the concerned window size is enlarged until the feature value exceeds a threshold. In this three-dimensional shape measuring apparatus, the matching process can be conducted using a feature value having enough great value, with which an object portion displayed in a window of the reference image and a window in the comparing image displaying the same object can be distinguished easily from other windows on the epipolar line in the comparing image. With this configuration, the above mentioned error matching can be suppressed, and an effective matching process can be conducted easily.

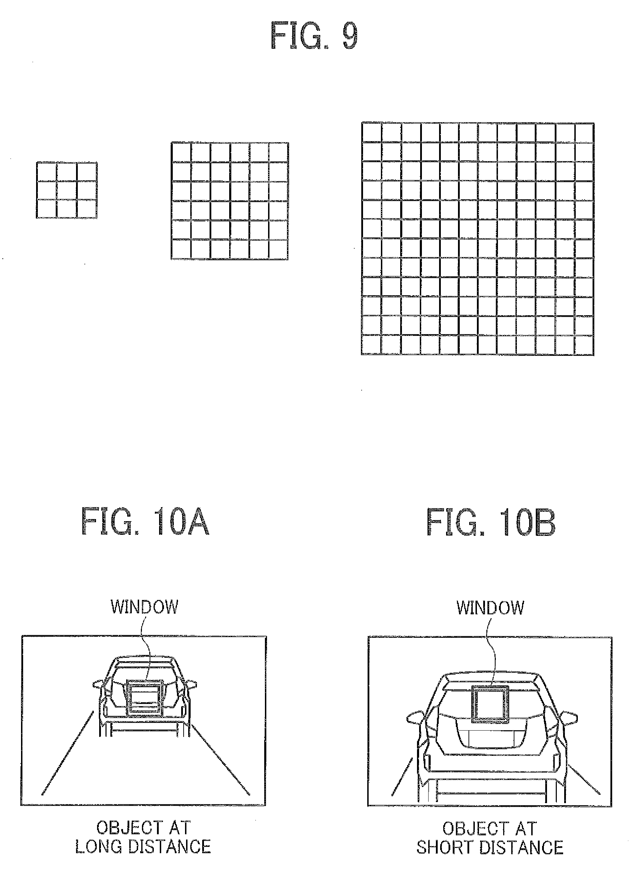

The present inventors have realized that a size suitable for the window (i.e., search target area) set in the reference image can be determined in view of a size of an image area of an object displayed at the center point of the window (target portion for computing parallax. Specifically, as shown in FIG. 10A , if a window size is a suitable size with respect to an object image area of an object (e.g., ahead vehicle) displayed in the window, a feature value having effectively greater value can be obtained, with which a suitable parallax value can be computed for the concerned object. However, as shown in FIG, 10B, if a window size is too small with respect to an object image area of an object (e.g., ahead vehicle) displayed in the window, only the same part (e.g., rear glass) of the object is displayed in the windows, in which a suitable feature value cannot be obtained for the window, and an error matching may occur and a suitable value of the parallax value cannot be computed.

In the three-dimensional shape measuring apparatus described in JP-2000-331148-A, a window size can be enlarged until a feature value exceeds a threshold, with which a suitable window size matched to a size of an object image area of an object displayed at the center point of the window (target portion for computing parallax) can be set. However, in the three-dimensional shape measuring apparatus described in JP-2000-331148-A, a feature value is computed for each one of set windows, and a window size is enlarged until a feature value exceeds a threshold, in which processing load to determine a window size may become heavy and processing time may become longer, which are not preferable.

SUMMARY

In one aspect of the present invention, an image processing apparatus is devised. The image processing apparatus-uses two captured images captured by two image capturing units disposed on a given base line. One of the two captured images is as a reference image and another one of the two captured images is used as a comparing image. The image processing apparatus includes a parallax computing unit to conduct a matching process and a parallax computing process. In the matching process, the parallax computing unit compares a first feature value of a search target area related to a target portion for computing parallax in the reference image, and a second feature value of each of candidate (corresponding areas in the comparing image respectively related to a plurality of candidate corresponding portions existing on an epipolar line that is the same epipolar line of the target portion for computing parallax, and the parallax computing unit identifies a candidate corresponding area having a second feature value matched to the first feature value of the search target area as a corresponding area or a candidate corresponding area having a second feature value within a given range from the first feature value as a corresponding area. In the parallax computing process, the parallax computing unit computes a deviation amount between the target portion for computing parallax and a corresponding portion related to the corresponding area identified by the matching process along the base line direction as a parallax value of the target portion for computing parallax. When the matching process is conducted, the parallax computing unit sets a size of the search target area in view of the deviation amount of a candidate corresponding portion along the base line direction with respect to the target portion for computing parallax, in which the greater the deviation amount of the candidate corresponding portion along the base line direction with respect to the target portion for computing parallax, the greater size is set for the search target area that is compared with a feature value of a candidate corresponding area related to the candidate corresponding portion.

In another aspect of the present invention, a method of computing parallax is devised. The method of computing parallax uses two captured images captured by two image capturing units disposed on a given base line. One of the two captured images is as a reference image and another one of the two captured images is used as a comparing image. The method includes the steps of: comparing a first feature value of a search target area related to a target portion for computing parallax in the reference image, and a second feature value of each of candidate corresponding areas in the comparing image respectively related to a plurality of candidate corresponding portions existing on an epipolar line that is the same epipolar line of the target portion for computing parallax; identifying a candidate corresponding area having a second feature value matched to the first feature value of the search target area as a corresponding area, or identifying a candidate corresponding area having a second feature value within a given range from the first feature value as a corresponding area, with which a matching process conductable; computing a deviation amount between the target portion for computing parallax and a corresponding portions, related to the corresponding area identified by the matching process, along the base line direction as a parallax value of the target portion for computing parallax; and setting a size of the search target area in view of the deviation amount of a candidate corresponding portion along the base line direction with respect to the target portion for computing parallax, in which the greater the deviation amount of the candidate corresponding portion along the base line direction with respect to the target portion for computing parallax, the greater size is set for the search target area that is compared with a feature value of a candidate corresponding area related to the candidate corresponding portion.

In another aspect of the present invention, a computer-readable carrier medium storing a program that, when executed by a computer, causes the computer to execute method of computing parallax is devised. The method of computing parallax uses two captured images captured by two image capturing units disposed on a given base line. One of the two captured images is as a reference image and another one of the two captured images is used as a comparing image. The method includes the steps of: comparing a first feature value of a search target area related to a target portion for computing parallax in the reference image, and a second feature or each of candidate corresponding areas in the comparing image respectively related to a plurality of candidate corresponding portions existing on an epipolar line that is the same epipolar line of the target portion for computing parallax; identifying a candidate corresponding area having a second feature value matched to the first feature value of the search target area as a corresponding area, or identifying a candidate corresponding area having a second feature value within a given range from the first feature value as a corresponding area, with which a matching process conductable; computing a deviation amount between the target portion for computing parallax and a corresponding portion, related to the corresponding area identified by the matching process, along the base line direction as a parallax value of the target portion for computing parallax; and setting a size of the search target area in view of the deviation amount of a candidate corresponding portion along the base line direction with respect to the target portion for computing parallax, in which the greater the deviation amount of the candidate corresponding portion along the base line direction with respect to the target portion for computing parallax, the greater size is set for the search target area that is compared with a feature value of a candidate corresponding area related to the candidate corresponding portion.

In the above described configurations, a window size having less computing error for parallax value can be set with simpler processing, and the above described example embodiment can be applied to an image processing apparatus, a distance measurement apparatus, a vehicle-device control system, a vehicle, and an image processing program.

BRIEF DESCRIPTION OF THE DRAWINGS

A more complete appreciation of the disclosure and many of the attendant advantages and features thereof can be readily obtained and understood from the following detailed description with reference to the accompanying drawings, wherein:

FIG. 1 is a schematic view of a vehicle-mounted device control system according to an example embodiment;
FIG. 2 is a schematic configuration of an image capturing unit and an image analyzer employable for the vehicle-mounted device control system;
FIG. 3 is a block diagram of a parallax computing unit according to an example embodiment;
FIG. 4 is a graph showing an example profile of similarity related to deviation amount between a reference window and a comparing window;
FIG. 5 is an example table of setting data of a window width and a window height;
FIG. 6 is a flowchart showing steps of a process computing similarity level according to an example embodiment;
FIG. 7 shows examples of settings of windows according to an example embodiment;
FIG. 8 shows other examples of settings of window according to an example embodiment;
FIG. 9 shows settings of windows shown in FIG. 7; and
FIG. 10A shows a window when a distance to an object displayed in the window is long, and FIG. 10B shows a window when a distance to an object displayed in the window is short.

The accompanying drawings are intended to depict exemplary embodiments of the present invention and should not be interpreted to limit the scope thereof. The accompanying drawings are not to be considered as drawn to scale unless explicitly noted, and identical or similar reference numerals designate identical or similar components throughout the several views.

DETAILED DESCRIPTION

A description is now given of exemplary embodiments of the present invention. It should be noted that although such terms as first, second, etc. may be used herein to describe various elements, components, regions, layers and/or sections, it should be understood that such elements, components, regions, layers and/or sections are not limited thereby because such terms are relative, that is, used only to distinguish one element, component, region, layer or section from another region, layer or section. Thus, for example, a first element, component, region, layer or section discussed below could be termed a second element, component, region, layer or section without departing from the teachings of the present invention.

In addition, it should be noted that the terminology used herein is for the purpose of describing particular embodiments only and is not intended to be limiting of the present invention. Thus, for example, as used herein, the singular forms "a", "an" and "the" are intended to include the plural forms as well, unless the context clearly indicates otherwise. Moreover, the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

Furthermore, although in describing views shown in the drawings, specific terminology is employed for the sake of clarity, the present disclosure is not limited to the specific terminology so selected and it is to be understood that each specific element includes all technical equivalents that operate in a similar manner and achieve a similar result. Referring now to the drawings, an apparatus or system according to an example embodiment is described hereinafter.

A description is given of an image processing apparatus according to an example embodiment. The image processing apparatus can be applied to an object detection apparatus used as a distance measurement apparatus of a vehicle system such as a vehicle-mounted device control system. The image processing apparatus can be applied to systems other than the vehicle-mounted device control system. For example, the distance measurement apparatus that measures distance to an object based on captured images can be applied to other systems. For example, the distance measurement apparatus can be applied to an emergency control system of vehicle, an auto cruise control system, and an operation control system of industrial robots. The vehicle is not limited to any specific type of vehicles and may include various types of vehicles such as automobiles, robots, or the like.

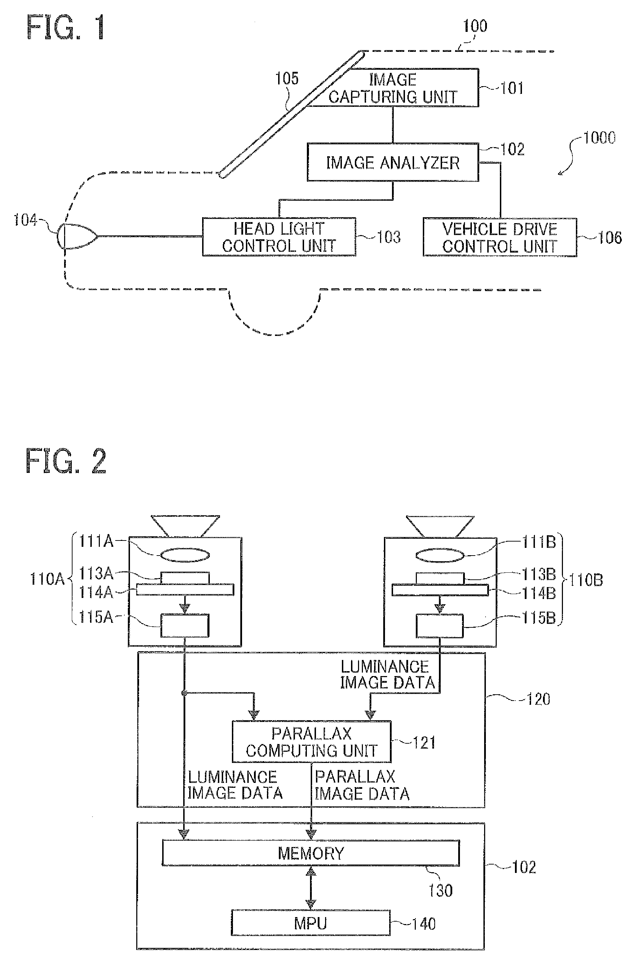

FIG. 1 shows a schematic configuration of a vehicle-mounted device control system 1000 according to an example embodiment, which is applied to a vehicle 100, The vehicle 100 is a mobile vehicle such as an automobile, a robot, or the like that can move on or over a surface such as a road surface but not limited hereto. The vehicle-mounted device control system includes an image capturing unit 101. The image capturing unit 101 is used as an image capturing device to capture an image of area ahead of the vehicle 100 that moves in a given direction, in which the area ahead of the vehicle 100 may be referred to as an image capturing area. The image capturing unit 101 is mounted with, for example, a rear-view mirror disposed near at a windshield 105 of the vehicle 100.

Various data such as image data captured by the image capturing unit 101 is input to the image analyzer 102 used as an image processing unit. The image analyzer 102 analyzes the data transmitted from the image capturing unit 101, in which the image analyzer 102 can be used to compute information of other vehicle existing in a forward direction of the vehicle 100 such as vehicle position, a point of the compass (e.g., north, south, east, west), and distance to other vehicle ahead of the vehicle 100. When other vehicle is to be detected as a target, the other vehicle on the road surface can be detected using parallax information.

Further, the computed result computed by the image analyzer 102 is transmitted to a vehicle drive control unit 106, which may be also referred to as a vehicle-device controller, vehicle-device control unit, or simply a device controller that controls one or more devices mounted to a vehicle. The vehicle drive control unit 106 can provide a cruise assistance control based on a detection result of a vehicle ahead of the vehicle 100. Specifically, when a distance from the vehicle 100 to the ahead vehicle becomes shorter or longer, the vehicle drive control unit 106 conducts .the cruise assistance control such as reporting a warning to a driver of the vehicle 100 and/or controlling the steering and brakes of the vehicle 100.

Further, the computed result computed by the image analyzer 102 is transmitted to a headlight control unit 103, which is one example of a vehicle-device control unit. For example, based on a detection result of an incoming vehicle, the vehicle drive control unit 106 conducts a switching control of high beam/low beam of the headlight 104 using the headlight control unit 103.

FIG. 2 shows a schematic configuration of the image capturing unit 101 and the image analyzer 102. The image capturing unit 101 is, for example, a stereo camera having a plurality of capturing units such as a first capturing unit 110A and a second capturing unit 110B as image capturing units, in which the first capturing unit 110A. and the second capturing unit 110B have the same configuration.

The first capturing unit 110A is configured with a first capturing lens 111 A, a first image sensor 113A, a first sensor board 114A, and a first signal processor 115A. The second capturing unit 110B is configured with a second capturing lens 111B, a second image sensor 113B, a second sensor board 114B, and a second signal processor 115B. The first sensor board 114A is disposed with the first image sensor 113A having arranged image capturing elements two-dimensionally, and the second sensor board 114B is disposed with the second image sensor 113B having arranged image capturing elements two-dimensionally. The first signal processor 115A converts analog electrical signals output from the first sensor board 114A (i.e., light quantity received by light receiving elements on the first image sensor 113A) to digital signals to prepare captured image data, and outputs the captured image data. The second signal processor 115B converts analog electrical signals output from the second sensor board 114B (i.e., light quantity received by light receiving elements on the second image sensor 113B) to digital signals to prepare captured image data, and outputs the captured image data. The image capturing unit 101 can output luminance image data and parallax image data.

Further, the image capturing unit 101 includes a processing hardware 120 (image processing unit) such as an application specific integrated circuit (ASIC) and a field-programmable gate array (FPGA) but not limited hereto. The processing hardware 120 can be devised as a combination of a micro-computer and program. The processing hardware 120 includes a parallax computing unit 121 to obtain parallax image from luminance image data output from the first capturing unit 110A and the second capturing unit 110B. Specifically, the parallax computing unit 121 computes parallax of an object between an image captured by the first capturing unit 110A and an image captured by the second capturing unit 110B by comparing a corresponding image portion on the captured images. The parallax computing unit 121 can be used as a parallax information generator.

The value of parallax can be computed using one image captured by one of the first and second capturing units 110A and 110B as a reference image and other image captured by other one of the first and second capturing units 110A and 110B as a comparing image. In the image capturing area, an image portion (i.e., a target portion for computing parallax) in the reference image and an image portion (i.e., a corresponding portion) in the comparing image are corresponded to the same point, and compared to compute a positional deviation between the reference image and the comparing image as parallax "d" of the concerned image portion using the following formula (1). The positional deviation between the reference image and the comparing image corresponds to the positional deviation on the base line direction.

in the following formula (1), "x1" is a position coordinate on the base line (epipolar line) for an image portion (i.e., a target portion for computing parallax) in the reference image, and "x2" is a position coordinate on the base line (epipolar line) for an image portion (i.e., a corresponding portion) in the comparing image, which displays a point corresponding to a point of the object displayed in the image portion in the reference image. In this description, it is assumed that the base line direction and the epipolar line direction are matched.

$$d = x1 - x2 \quad \cdots (1)$$

By using the fundamental of triangulation and the computed parallax value d, distance Z to one same point in the image capturing area corresponding to the concerned image portion (i.e., target portion for computing parallax) can be computed using the following formula (2). In the following formula (2), "B" is the base line length between the first and second capturing units 110A and 110B, and "f" is a focal distance of an image capturing unit.

$$Z = B \times f/d \quad \cdots (2)$$

The image analyzer 102 includes, for example, a memory 130, and a micro processing unit (MPU) 140. The memory 130 stores luminance image data and parallax image data output from the image capturing unit 101. The MPU 140 can be installed with software used for the recognition processing of a target object and controlling the parallax calculation. The MPU 140 conducts various recognition processing using the luminance image data and parallax image data stored in the memory 130.

Each of the first image sensor 113A and the second image sensor 113B is an image sensor using, for example, a charge coupled device (CCD), a complementary metal oxide semiconductor (CMOS) or the like. The image capturing element (or light receiving element) of the image sensors 113A and 113B employs, for example, a photodiode. The photadiode is disposed for each of image capturing pixels by arraying a plurality of photodiodes two-dimensionally. Further, a micro lens is disposed at an incidence side of each of the photodiodes to increase light condensing efficiency. The first image sensor 113A and the second image sensor 113B can be bonded to a printed wiring board (PWB) using wire bonding or the like, with which the first sensor board 114A and the second sensor board 114B are formed.

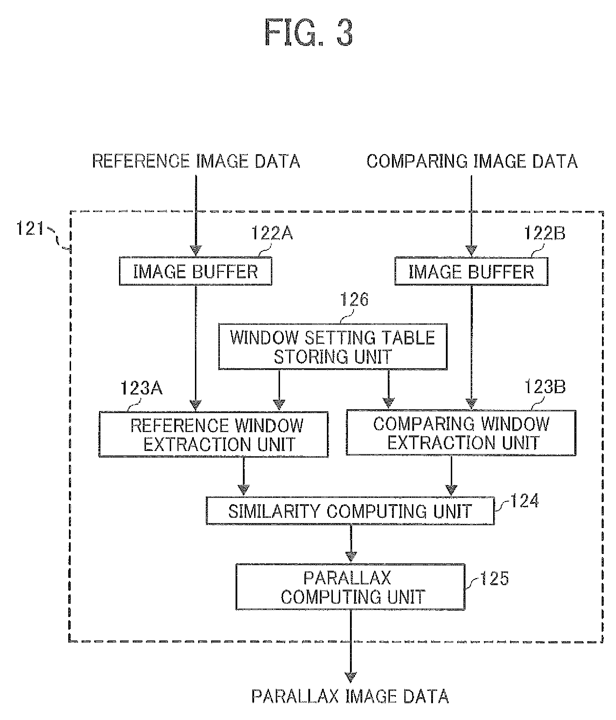

A description is given of parallax computing according to an example embodiment. FIG. 3 is a block diagram of the parallax computing unit 121 according to an example embodiment. As to the first and second capturing units 110A and 110B, for example, captured image data captured by the first capturing unit 110A is used as reference image data, and captured image data captured by the second capturing unit 110B is used as comparing image data. The parallax computing unit 121 computes parallax of the reference image data and comparing image data to generate and output parallax image data. The parallax image data indicates a parallax image composed of pixel values corresponding to parallax values computed for each image portion on the reference image data.

The parallax computing unit 121 receives the image data output from the first and second capturing units 110A and 110B via the image data bus, and stores the image data in image buffers 122A and 122B, respectively. The reference image data stored in the image buffer 122A are sequentially transmitted to the reference window extraction unit 123A that extracts a reference window as a search target area. The reference window extraction unit 123A sequentially determines each image portion on the reference image as target pixel used as a target portion for computing parallax, wherein each image portion on the reference image is an image area composed of one pixel or two or more pixels, and for example, one pixel is used for an example embodiment. Then, the reference window, extraction unit 123A extracts a reference window used as a search target area, which is related to the determined target pixel.

Further, the comparing image data stored in the image buffer 122B are sequentially transmitted to a comparing window extraction unit 123B that extracts one or more candidate comparing windows each used as a candidate corresponding area. The comparing window extraction unit 123B is used to extract a comparing window (corresponding to the reference window.

A target pixel in the reference image (i.e., target portion for computing parallax) exists on one epipolar line. A pixel in the comparing image on the same epipolar line corresponding to the epipolar line of the target pixel in the reference image is referred to as a candidate corresponding pixel or candidate corresponding portion. An area related to the candidate corresponding portion in the comparing image is referred to as a candidate corresponding area, and the candidate corresponding area is extracted by the comparing window extraction unit 123B as a candidate comparing windows for a plurality of numbers in the comparing image.

Then, a matching process is conducted, in which among the candidate comparing windows, one candidate comparing window that displays an object portion, which is the same object portion displayed on the reference window extracted from the reference image, is searched and identified, with which the identified comparing window matched to the reference window can be used as a corresponding area. Pixel related to the identified comparing window (corresponding area) is used as a corresponding pixel (corresponding portion) to be compared with the target pixel. A parallax value of the target pixel can be computed based on a deviation amount between the target pixel and the corresponding pixel on the same epipolar line (deviation amount in the base line direction).

The above described matching process may be mainly conducted by a similarity computing unit 124 and a parallax computing unit 125. Specifically, pixel value (luminance value) data in the reference window and the comparing window respectively extracted by the reference window extraction unit 123A and the comparing window extraction unit 123B are transmitted to the similarity computing unit 124. The similarity computing unit 124 computes similarity using AD (sum of squared difference), SSD (sum of absolute difference), NCC (normalized cross-correlation), ZNCC (zero-mean normalized cross-correlation) or a combination of thereof.

This similarity level is computed between the reference window extracted by the reference window extraction unit 123A and each of the candidate comparing windows extracted by the comparing window extraction unit 123B on the same epipolar line, and the similarity is used as an indicator indicating similarity levels of images between the reference window and the candidate comparing window. When the similarity is computed using SSD and SAD, similarity value becomes smaller as higher the similarity, and when the similarity is computed using NCC and ZNCC, similarity value becomes greater as higher the similarity.

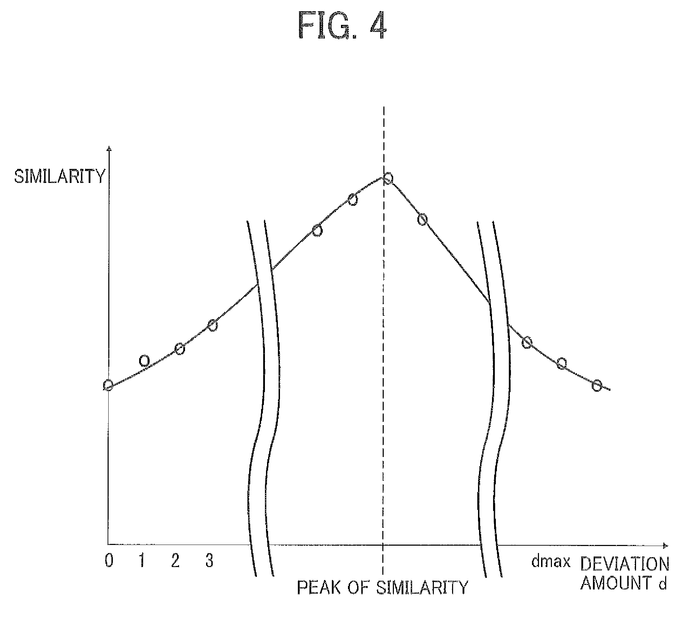

FIG. 4 is a graph which is an example profile of similarity level in relation with the deviation amount "d" between the reference window and the comparing window. FIG. 4 is an example profile, in which the higher the similarity, the greater the computed similarity level or value. As to a relationship between the similarity, level and the deviation amount, one typical profile shows a pattern shown in FIG. 4, in which one deviation amount among deviation amounts corresponds to a peak of similarity. The similarity computing unit 124 computes similarity level between a reference window received from the reference window extraction unit 123A and each of candidate comparing windows sequentially received from the comparing window extraction unit 123B, and the similarity computing unit 124 sequentially transmits the computed similarity level to the parallax computing unit 125.

The parallax computing unit 125 identifies one similarity level indicating a peak among similarity levels computed for the same one reference window transmitted from the similarity computing unit 124. Then, the parallax computing unit 125 computes the deviation amount d between the comparing window, corresponding to the identified one similarity level, and the reference window as a parallax value. The identification of similarity level indicating a peak among similarity levels can be conducted by extracting a maximum value among similarity levels, or using method such as a polynomial expression fitting and an equiangular straight line Fitting, in which parallax can be obtained for each sub-pixel unit.

By conducting the above described processing to each one of pixels in the reference image, a parallax value for each one of pixels in the reference image displaying a given point of an object can be obtained, with which parallax image data can be generated.

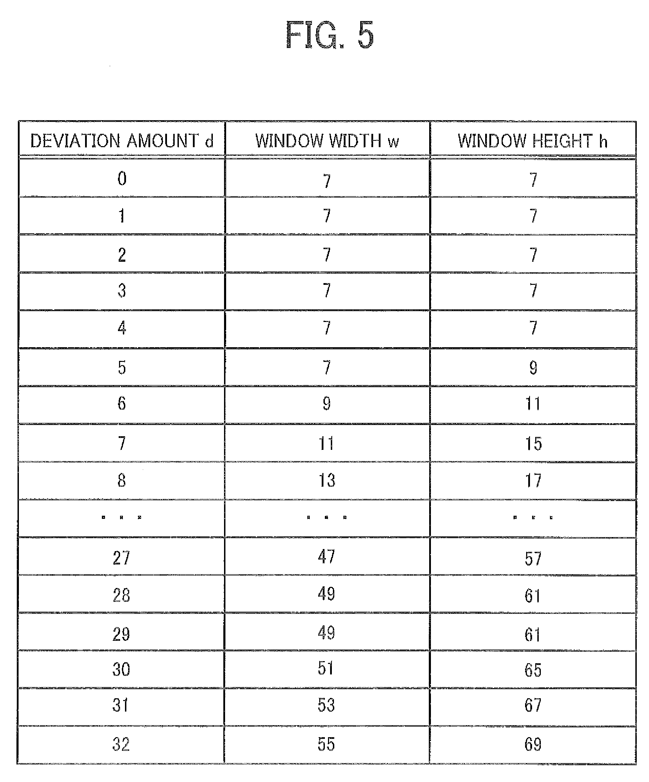

When computing the similarity level, a process of changing a size of window depending on the deviation amount d can be conducted. As to the process of changing the window size in an example embodiment, a window setting table storing unit 126 in the parallax computing unit 121 stores a window setting table indicating a relationship between the deviation amount d and window setting data. As to the window setting table, the greater the deviation amount of the comparing window with respect to the reference window in the base line direction (deviation amount on the epipolar line), the size of window is enlarged. In an example embodiment, the reference window and the comparing window can use the same window setting data. For example, the window setting data may be prepared as table data as shown in FIG. 5, in which a relationship between the deviation amount d and the window width "w"/window height "h" are set, but the window setting data is not limited hereto.

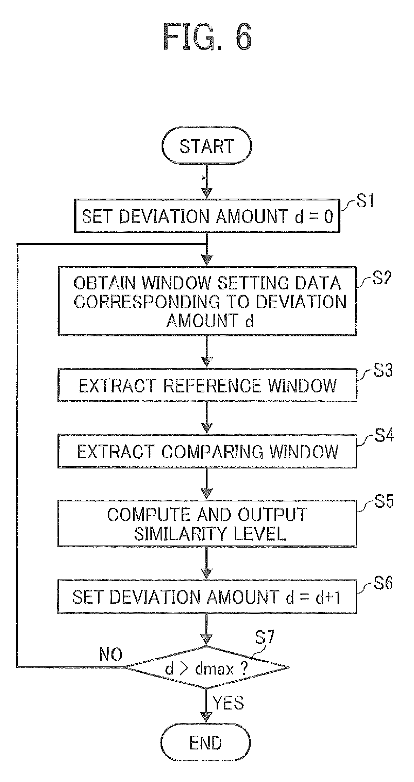

FIG. 6 is a flowchart showing steps of a process computing similarity level according to an example embodiment. At first, the parallax computing unit 121 sets the deviation amount d at zero (step S1), and obtains window setting data corresponding to the set deviation amount d from the window setting table (step S2). Then, based on the window setting data, a reference window related to a target pixel is set, and pixel data in the reference window is extracted from the reference image data (step S3). Further, based on the window setting data, a comparing window related to the target pixel is set, and pixel data in the comparing window is extracted from the comparing image data (step 84).

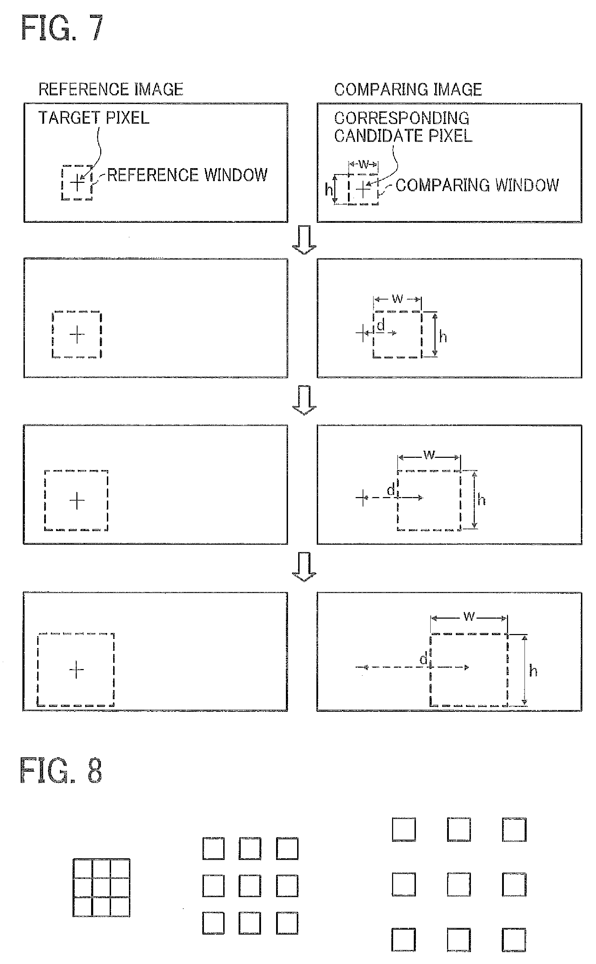

FIG. 7 shows examples of settings of window according to an example embodiment. As to example windows shown in FIG. 7, the similarity level is computed based on the deviation amount d in the base line direction for a comparing window with respect to a reference window. When the similarity level of the comparing window and the reference window is computed, the greater the deviation amount d in the base line direction (deviation amount on the epipolar line) for the comparing window, the greater the window width "w" and the window height "h" (i.e., the window width "w" and the window height "h" are enlarged). When the size of the window is enlarged due to the enlargement of the window width and the window height, the number of pixels increases. In this example case, a relationship between the window width "w", which is a window length along the base line direction (length along the epipolar line direction), and the deviation amount d can be expressed as "w = p × d" (p is constant). However, if the window width "w" cannot be set freely due to the limitation of hardware, the window width "w" can be set with a hardware settable value closest to "p × d", and such value is used as the window width "w". Further, in this example case, both of the window width and the window height are enlarged depending on the deviation amount d, but one of the window width and the window height can be enlarged depending on the deviation amount d.

When pixel data is extracted from the reference window and the comparing window set by the above described process, the similarity level of pixel data is computed and output (step S5). For example, when the normalized cross-correlation (ZNCC) is used for computing the similarity level, a ZNCC value $R_{ZNCC}$ can be computed by the following formula (3) using the deviation amount d, the window width "w", the window height "h", a pixel (luminance) value $B_R$ (x, y) in the reference window, a pixel (luminance) value $B_L$ (x, y) in the comparing window, an average pixel value (average luminance value) Brave in the reference window, and an average pixel value (average luminance value) $B_{Lave}$ in the comparing window.

$$R_{ZNCC}(d,x,y) = \frac{\sum_{i=x-\frac{w}{2}}^{x+\frac{w}{2}} \sum_{j=y-\frac{h}{2}}^{y+\frac{h}{2}} \left(B_R(i,j) - B_{Rave}\right)\left(B_L(i+d,j) - B_{Lave}\right)}{\sqrt{\sum_{i=x-\frac{w}{2}}^{x+\frac{w}{2}} \sum_{j=y-\frac{h}{2}}^{y+\frac{h}{2}} \left(B_R(i,j) - B_{Rave}\right)^2} \sqrt{\sum_{i=x-\frac{w}{2}}^{x+\frac{w}{2}} \sum_{j=y-\frac{h}{2}}^{y+\frac{h}{2}} \left(B_L(i,j) - B_{Lave}\right)^2}} \cdots (3)$$

When the similarity level is computed for the comparing window having the deviation amount d by the above described process, one is added to the deviation amount d and "d+1" is set (step S6). The similarity level is computed (step S2 - S6) by enlarging the size of the window until the deviation amount d exceeds "dmax" (step S7). Then, when the similarity level is computed for all of deviation amount d and output, the similarity level computing process ends. The dmax is a maximum value of the deviation amount d stored in the window setting table storing unit 126.

FIG. 8 shows other example of settings of window according to an example embodiment. As to the example shown in FIG. 8, the similarity level is computed based on the deviation amount d in the base line direction for a comparing window with respect to a reference window without changing the number of pixels in the window. When the similarity level is computed for the comparing window, the greater the deviation amount d in the base line direction (deviation amount on the epipolar line) for the comparing window, the greater size is set for the window (i.e., window size is enlarged). In this case, the number of pixels included in any one of the comparing windows is constant when the similarity level is computed, with which an increase of processing time can be suppressed even if the size of the window is enlarged. However, because pixel values are obtained by setting an interval, an effect such as aliasing noise may likely occur. By contrast, in a case of settings shown in FIG. 7, the number of pixels included in a window increases as the size of the window enlarges as shown in FIG. 9, with which the processing time may be increased but an effect such as aliasing noise may not occur. The above described example settings can be selectively used depending on a circuit size and out-of-focus property of a lens.

The above described example embodiment may provide following Embodiments.

(Embodiment A)

An image processing apparatus (102, 120) uses two captured images captured by two image capturing units (110A, 110B) disposed on a given base line. One of the two captured images is used as a reference image and another one of the two captured images is used as a comparing image. The image processing apparatus (102, 120) includes a parallax computing unit (121) to conduct a matching process and a parallax computing process. In the matching process, the parallax computing unit (121) compares a first feature value of a search target area related to a target portion for computing parallax in the reference image, and a second feature value of each of candidate corresponding areas in the comparing image respectively related to a plurality of candidate corresponding portions existing on an epipolar line that is the same epipolar line of the target portion for computing parallax, and the parallax computing unit (121) identifies a candidate corresponding area having a second feature value matched to the first feature value of the search target area as a corresponding area or a candidate corresponding area having a second feature value within a given range from the first feature value as a corresponding area. In the parallax computing process, the parallax computing unit (121) computes a deviation amount between the target portion for computing parallax and a corresponding portion related to the corresponding area identified by the matching process along the base line direction as a parallax value of the target portion for computing parallax. When the matching process is conducted, the parallax computing unit (121) sets a size of the search target area in view of the deviation amount of a candidate corresponding portion along the base line direction with respect to the target portion for computing parallax, in which the greater the deviation amount of the candidate corresponding portion along the base line direction with respect to the target portion for computing parallax, the greater size is set for the search target area that is compared with a feature value of a candidate corresponding area related to the candidate corresponding portion.

With this configuration, as to a candidate corresponding portion having a relatively greater deviation amount d in the base line direction (deviation amount on the epipolar line) with respect to a target portion for computing parallax, a size of a search target area (reference window) to be compared with a feature value of the candidate corresponding area (comparing window) can be enlarged.

With the configuration of Embodiment A, as to a candidate corresponding portion having a smaller deviation amount d in the base line direction (deviation amount on the epipolar line) with respect to the target portion for computing parallax (target pixel) compared to the deviation amount corresponding to a distance to a point of an object displayed on the target pixel, the size of the reference window to be compared with the feature value of the comparing window is set smaller than an optimal size of an image area of the concerned object. In this case, only the same one part composing the concerned object is displayed in the window, and an effective feature value may not be obtained for the concerned window. Therefore, by reducing an error matching that such comparing window is identified as a corresponding area when the matching process is conducted, situations that an effective parallax value cannot be computed due to the error matching can be reduced effectively.

If a candidate corresponding portion has a deviation amount d in the base line direction (deviation amount on the epipolar line) with respect to the target portion for computing parallax (target pixel) as same as or similar to the deviation amount corresponding to a distance to a point of an object displayed on the concerned target pixel, or of a candidate corresponding portion has a deviation amount d in the base line direction (deviation amount on the epipolar line) with respect to the target portion for computing parallax (target pixel) greater than the deviation amount corresponding to a distance to a point of an object displayed on the concerned target pixel, the size of the reference window to be compared with a feature value of the comparing window is set within a preferable area range with respect to an image area of the concerned object or is set with a greater area than an image area of the concerned object. In this case, a relatively greater feature value can be obtained, with which the matching process can be conducted effectively.

However, if the size of the reference window is set too great with respect to an image area of the concerned object, the feature of the concerned object may be diluted by a feature of other object, with which an effective feature value of the reference window may not be obtained. In this case, a plurality of comparing windows having the same or similar feature value may be detected in the matching process, and an error matching may more likely occur. However, even if the error matching occurs, to be described as follows, computing error of parallax value due to the error matching can be suppressed or little. A description is given of this matter.

A position of the center point of the window in the reference image on the epipolar line is defined as "x1," and a position in the comparing image on the epipolar line, which displays the same point of the same object displayed at the center point of the window in the reference image, is defined as "x2." In this configuration, a positional error on the image between a point of the x2' in the comparing image, identified by the error matching, and the point "x2" in the comparing image displaying the same point of the object displayed at the center point of the window in the reference image is defined as a matching error "$\varepsilon_x$."

The correct parallax value d can be obtained as "$d = x1 - x2$." If the matching error $\varepsilon_x$ due to the error matching exists, a parallax value d' when the matching error $\varepsilon_x$ due to the error matching exists can be computed $d' = x1 - x2' = x1 - x2 - \varepsilon_x = d - \varepsilon_x$. Effect of the matching error $\varepsilon_x$ to the error of computed parallax value d' can be estimated by a parallax error rate $\varepsilon_d = (d - d')/d = \varepsilon_x/d$, in which the effect of the matching error $\varepsilon_x$ becomes smaller as the correct parallax value d becomes greater. In other words, the closer the distance to the point of the object displayed at the center point of the window in the reference image, the smaller the effect of the matching error $\varepsilon_x$ to the error of computed parallax value d'.

Therefore, as to a candidate corresponding portion having a relatively greater deviation amount d in the base line direction (deviation amount on the epipolar line) with respect to the target portion for computing parallax, even if an error matching occurs due to an enlargement of the size of the search target area (reference window), the effect of the error matching to the error of the computed parallax value (deviation amount) can be suppressed or little.

As above described, in this Embodiment A, as to a candidate corresponding area having a parallax value smaller than a parallax value corresponding to a distance to a point of an object displayed in a target portion for computing parallax (target pixel) in the reference window, the reference window that is relatively smaller than an object image area of the concerned object is set and the obtained feature value becomes small. However, an error matching that a candidate corresponding area having a smaller feature value is identified as a corresponding area can be reduced. Therefore, situations that effective parallax values cannot be computed due to the error matching can be reduced effectively.

Further, in this Embodiment A, because the size of the reference window can be determined based on the deviation amount d in the base line direction (deviation amount on the epipolare line) between the target portion for computing parallax and the candidate corresponding portion, the processing load of the present invention can be smaller and the professing time of the present invention can be shorter compared to the three-dimensional shape measuring apparatus of JP-2000-331148-A that determines a window size by repeating a process of computing a feature value in the reference window and enlarging a window size until the feature value exceeds a threshold.

(Embodiment B)

In Embodiment A, when the matching process is conducted, the parallax computing unit (121) sets a size of the search target area in view of a deviation amount of a candidate corresponding portion along the base line direction with respect to the target portion for computing parallax, in which the greater the deviation amount of the candidate corresponding portion along the base line direction with respect to the target portion for computing parallax, the size of the search target area is enlarged without changing the number of pixels of the search target area. With this configuration, the processing-time increase due to the enlargement of the size of search target area can be suppressed.

(Embodiment C)

In Embodiment A, when the matching process is conducted, the parallax computing unit (121) sets a size of the search target area in view of a deviation amount of a candidate corresponding portion the base line direction with respect to the target portion for computing parallax, in which the greater the deviation amount of the candidate corresponding portion along the base line direction with respect to the target portion for computing parallax, the search target area is set by increasing the number of pixels of the search target area. With this configuration, an error matching due to the enlargement of the size of search target area can be reduced,

(Embodiment D)

In any one of Embodiment A to C, when the matching process is conducted, the parallax computing unit (121) sets a size of the search target area in view of a deviation amount of a candidate corresponding portion along the base line direction with respect to the target portion for computing parallax, in which the greater the deviation amount of the candidate corresponding portion along the base line direction with respect to the target portion for computing parallax, wherein the search target area is set by increasing a length of the search target area along the base line direction. With this configuration, an error matching effect due to the enlargement of the size of search target area can be reduced.

(Embodiment E)

A distance measurement apparatus for measuring distance to an object displayed at a target portion for computing parallax in a reference image based on images captured by image capturing units (110A, 110B) includes the image processing apparatus (see 102, 120) of any one of Embodiments A to D. With this configuration, distance measurement can be conducted effectively for an object at long distance and an object at short distance.

(Embodiment F)

The above described example embodiment can be applied to a vehicle-device control system. The vehicle-device control system includes the distance measurement apparatus of Embodiment E disposed on a given base line to measure distance to an object from a vehicle based on two captured images captured by using two image capturing units 110A and 110B capable of capturing images around the vehicle; and a device controller such as the headlight control unit 103 and the vehicle drive control unit 106 to control one or more of devices such as an alarm device, a breaking device and the headlight 104 mounted to the vehicle based on a measurement result obtained by using the distance measurement apparatus. With this configuration, based on distance measurement effectively conducted for an object at long distance and an object at short distance, one or more devices mounted on a vehicle can be controlled effectively.

(Embodiment G)

The above described example embodiment can be applied to a vehicle mounted with one or more of devices. The vehicle includes the vehicle-device control system of the Embodiment F to control the one or more of devices. With this configuration, based on distance measurement effectively conducted for an object at long distance and an object at short distance, a vehicle that can effectively control one or more devices mounted on the vehicle can be provide.

(Embodiment H)

The above described example embodiment can be applied to an image processing program. A computer-readable carrier medium storing a program that, when executed by a computer, causes the computer to execute method of computing parallax using two captured images captured by two image capturing units (110A, 110B) disposed on a given base line, one of the two captured images being used as a reference image and another one of the two captured images being used as a comparing image, the method comprising the steps of: comparing a first feature value of a search target area related to a target portion for computing parallax in the reference image, and a second feature value of each of candidate corresponding areas in the comparing image respectively related to a plurality of candidate corresponding portions existing on an epipalar line that is the same epipolar line of the target portion for computing parallax; identifying a candidate corresponding area having a second feature value matched to the first feature value of the search target area as a corresponding area, or identifying a candidate corresponding area having a second feature value within a given range from the first feature value as a corresponding area, with which a matching process conductable; computing a deviation amount between the target portion for computing parallax and a corresponding portion, related to the corresponding area identified by the matching process, along the base line direction as a parallax value of the target portion for computing parallax; and setting a size of the search target area in view of the deviation amount of a candidate corresponding portion along the base line direction with respect to the target portion for computing parallax, in which the greater the deviation amount of the candidate corresponding portion along the base line direction with respect to the target portion for computing parallax, the greater size is set for the search target area that is compared with a feature value of a candidate corresponding area related to the candidate corresponding portion. With this configuration, a window size having less computing error of parallax value can be set with simpler processing.

In the above described example embodiment, a window size having less computing error for parallax value can be set with simpler processing, and the above described example embodiment can be applied to an image processing apparatus, a distance measurement apparatus, a vehicle-device control system, a vehicle, and an image processing program. The above described example embodiment can be applied to vehicle control systems that control movement of movable bodies such as vehicles including automobiles, trains, ships, airplanes, robots or the like, and applied to information providing apparatuses that provide information to drivers of the vehicles,

The present invention can be implemented in any convenient form, for example using dedicated hardware, or a mixture of dedicated hardware and software. The present invention may be implemented as computer software implemented by one or more networked processing apparatuses. The network can comprise any conventional terrestrial or wireless communications network such as the Internee. The processing apparatuses can compromise any suitably programmed apparatuses such as a general purpose computer, personal digital assistant, mobile telephone (such as a Wireless Application Protocol (WAP) or 3G-compliant phone) and so on. Since the present invention can be implemented as software, each and every aspect of the present invention thus encompasses computer software implementable on a programmable device.

The computer software can be provided to the programmable device using any storage medium or carrier medium for storing processor-readable code such as a floppy disk, a compact disk read only memory (CD-ROM), a digital versatile disk read only memory (DVD-ROM), DVD recording only/rewritable (DVD-R/RW), electrically erasable and programmable read only memory (EEPROM), erasable programmable read. only memory (EPROM), a memory card or stick such as USB memory, a memory chip, a mini disk (MD), a magneto optical disc (MO), magnetic tape, a hard disk in a server, a solid state memory device or the like, but not limited these.

The hardware platform includes any desired kind of hardware resources including, for example, a central processing unit (CPU), a random access memory (RAM), and a hard disk drive (HDD). The CPU may be implemented by any desired kind of any desired number of processors. The RAM may be implemented by any desired kind of volatile or non-volatile memory. The HDD may be implemented by any desired kind of non-volatile memory capable of storing a large amount of data. The hardware resources may additionally include an input device, an output device, or a network device, depending on the type of apparatus. Alternatively, the HDD may be provided outside of the apparatus as long as the HDD is accessible. In this example, the CPU, such as a cache memory of the CPU, and the RAM may function as a physical memory or a primary memory of the apparatus, while the HDD may function as a secondary memory of the apparatus.

In the above-described example embodiment, a computer can be used with a computer-readable program, described by object-oriented programming languages such as C++, Java (registered trademark), JavaScript (registered trademark), Perl, Ruby, or legacy programming language such as machine language, assembler language to control functional units used for the apparatus or system. For example, a particular computer (e.g., personal computer, workstation) may control an information processing apparatus or an image processing apparatus such as image forming apparatus using a computer-readable program, which can execute the above-described processes or steps. In the above-described embodiments, at least one or more of the units of apparatus can be implemented as hardware or as a combination of hardware/software combination. Each of the functions of the described embodiments may be implemented by one or more processing circuits. A processing circuit includes a programmed processor, as a processor includes circuitry. A processing circuit also includes devices such as an application specific integrated circuit (ASIC) and conventional circuit components arranged to perform the recited function.

Numerous additional modifications and variations are possible in light of the above teachings. It is therefor to be understood that within the scope of the appended claims, the disclosure of the present invention may be practiced otherwise than as specifically described herein. For example, elements and/or features of different examples and illustrative embodiments may be combined each other and/or substituted for each other within the scope of this disclosure and appended claims.

**Claims**

1.  An image processing apparatus (102, 120) using two captured images captured by two image capturing units (110A, 110B) disposed on a given base line, one of the two captured images being used as a reference image and another one of the two captured images being used as a comparing image, the image processing apparatus (102, 120) comprising:

    a parallax computing unit (121) to conduct a matching process and a parallax computing process,
    wherein in the matching process,
    the parallax computing unit (121) compares a first feature value of a search target area related to a target portion for computing parallax in the reference image, and a second feature value of each of candidate corresponding areas in the comparing image respectively related to a plurality of candidate corresponding portions existing on an epipolar line that is the same epipolar line of the target portion for computing parallax, and
    the parallax computing unit (121) identifies a candidate corresponding area having a second feature value matched to the first feature value of the search target area as a corresponding area or a candidate corresponding area having a second feature value within a given range from the first feature value as a corresponding area,
    wherein in the parallax computing process,
    the parallax computing unit (121) computes a deviation amount between the target portion for computing parallax and a corresponding portion related to the corresponding area identified by the matching process along the base line direction as a parallax value of the target portion for computing parallax,
    **characterised in that**
    when the matching process is conducted, the parallax computing unit (121) sets a size of the search target area in view of the deviation amount of a candidate corresponding portion along the base line direction with respect to the target portion for computing parallax, in which the greater the deviation amount of the candidate corresponding portion along the base line direction with respect to the target portion for computing parallax, the greater size is set for the search target area that is compared with a feature value of a candidate corresponding area related to the candidate corresponding portion.

2.  The image processing apparatus (102, 120) of claim 1, wherein when the matching process is conducted, the parallax computing unit (121) sets a size of the search target area in view of a deviation amount of a candidate corresponding portion along the base line direction with respect to the target portion for computing parallax, in which the greater the deviation amount of the candidate corresponding portion along the base line direction with respect to the target portion for computing parallax, the size of the search target area is enlarged without changing the number of pixels of the search target area.

3.  The image processing apparatus (102, 20) of claim 1, wherein when the matching process is conducted, the parallax computing unit (121) sets a size of the search target area in view of a deviation amount of a candidate corresponding portion the base line direction with respect to the target portion for computing parallax, in which the greater the deviation amount of the candidate corresponding portion along the base line direction with respect to the target portion for computing parallax, the search target area is set by increasing the number of pixels of the search target area.

4. The image processing apparatus (102, 120) of claim 1, wherein when the matching process is conducted, the parallax computing unit (121) sets a size of the search target area in view of a deviation amount of a candidate corresponding portion along the base line direction with respect to the target portion for computing parallax, in which the greater the deviation amount of the candidate corresponding portion along the base line direction with respect to the target portion for computing parallax, wherein the search target area is set by increasing a length of the search target area along the base line direction.

5. A distance measurement apparatus for measuring distance to an object displayed at a target portion for computing parallax in a reference image, the distance measurement apparatus comprising:

two image capturing units (110A, 110B) disposed on a given base line based on to capture images; and
the image processing apparatus (102,120) of any one of claims 1 to 4.

6. A vehicle-device control system comprising:

the distance measurement apparatus of claim 5 to measure distance to an object from a vehicle based on two captured images captured by using two image capturing units (110A, 110B), disposed on a given base line, capable of capturing images around the vehicle; and
a device controller (106) to control one or more of devices mounted to the vehicle based on a measurement result obtained by using the distance measurement apparatus.

7. A vehicle mounted with one or more of devices, comprising:

the vehicle-device control system of claim 6 to control the one or more of devices.

8. A computer-readable carrier medium storing a program that, when executed by a computer, causes the computer to execute method of computing parallax using two captured images captured by two image capturing units (110A, 110B) disposed on a given base line, one of the two captured images being used as a reference image and another one of the two captured images being used as a comparing image, the method comprising the steps of:

comparing a first feature value of a search target area related to a target portion for computing parallax in the reference image, and a second feature value of each of candidate corresponding areas in the comparing image respectively related to a plurality of candidate corresponding portions existing on an epipolar line that is the same epipolar line of the target portion for computing parallax;
identifying a candidate corresponding area having a second feature value matched to the first feature value of the search target area as a corresponding area, or identifying a candidate corresponding area having a second feature value within a given range from the first feature value as a corresponding area, with which a matching process conductable;
characterised it further comprises the steps of: computing a deviation amount between the target portion for computing parallax and a corresponding portion, related to the corresponding area identified by the matching process, along the base line direction as a parallax value of the target portion for computing parallax; and
setting a size of the search target area in view of the deviation amount of a candidate corresponding portion along the base line direction with respect to the target portion for computing parallax, in which the greater the deviation amount of the candidate corresponding portion along the base line direction with respect to the target portion for computing parallax, the greater size is set for the search target area that is compared with a feature value of a candidate corresponding area related to the candidate corresponding portion.

9. A method of computing parallax using two captured images captured by two image capturing units (110A, 110B) disposed on a given base line, one of the two captured images being used as a reference image and another one of the two captured images being used as a comparing image, the method comprising the steps of:

comparing a first feature value of a search target area related to a target portion for computing parallax in the

EP 2 803 944 B1

reference image, and a second feature value of each of candidate corresponding areas in the comparing image respectively related to a plurality of candidate corresponding portions existing on an epipolar line that is the same epipolar line of the target portion for computing parallax;

identifying a candidate corresponding area having a second feature value matched to the first feature value of the search target area as a corresponding area, or identifying a candidate corresponding area having a second feature value within a given range from the first feature value as a corresponding area, with which a matching process conductable;

characterised it further comprises the steps of: computing a deviation amount between the target portion for computing parallax and a corresponding portion, related to the corresponding area identified by the matching process, along the base line direction as a parallax value of the target portion for computing parallax; and setting a size of the search target area in view of the deviation amount of a candidate corresponding portion along the base line direction with respect to the target portion for computing parallax, in which the greater the deviation amount of the candidate corresponding portion along the base line direction with respect to the target portion for computing parallax, the greater size is set for the search target area that is compared with a feature value of a candidate corresponding area related to the candidate corresponding portion.


**Patentansprüche**

1.  Bildverarbeitungsvorrichtung (102, 120), die zwei aufgenommene Bilder verwendet, die von zwei Bildaufnahmeeinheiten (110A, 110B) aufgenommen werden, die auf einer gegebenen Grundlinie angeordnet sind, wobei eines der zwei aufgenommenen Bilder als ein Referenzbild verwendet wird und ein anderes der zwei aufgenommenen Bilder als ein Vergleichsbild verwendet wird, wobei die Bildverarbeitungsvorrichtung (102, 120) Folgendes umfasst:

    eine Parallaxenrecheneinheit (121), um einen Abgleichprozess und einen Parallaxenberechnungsprozess auszuführen,
    wobei in dem Abgleichprozess
    die Parallaxenrecheneinheit (121) einen ersten Merkmalswert einer Suchzielfläche mit Bezug auf einen Zielabschnitt zum Berechnen der Parallaxe im Referenzbild und einen zweiten Merkmalswert von jeder der möglichen, entsprechenden Flächen im Vergleichsbild, jeweils mit Bezug auf mehrere mögliche, entsprechende Abschnitte, die auf einer epipolaren Linie vorhanden sind, die dieselbe epipolare Linie wie die des Zielabschnitts zum Berechnen der Parallaxe ist, vergleicht, und
    die Parallaxenrecheneinheit (121) eine mögliche, entsprechende Fläche, die einen zweiten Merkmalswert aufweist, der mit dem ersten Merkmalswert der Suchzielfläche abgeglichen ist, als eine entsprechende Fläche identifiziert oder eine mögliche, entsprechende Fläche, die einen zweiten Merkmalswert innerhalb eines gegebenen Bereiches von dem ersten Merkmalswert aufweist, als eine entsprechende Fläche identifiziert,
    wobei in dem Parallaxenberechnungsprozess
    die Parallaxenrecheneinheit (121) einen Abweichungsbetrag zwischen dem Zielabschnitt zum Berechnen der Parallaxe und einem entsprechenden Abschnitt mit Bezug auf die durch den Abgleichprozess identifizierte, entsprechende Fläche in Grundlinienrichtung als einen Parallaxenwert des Zielabschnitts zum Berechnen der Parallaxe berechnet,
    **dadurch gekennzeichnet, dass**
    die Parallaxenrecheneinheit (121) eine Größe der Suchzielfläche im Hinblick auf den Abweichungsbetrag eines möglichen, entsprechenden Abschnitts in Grundlinienrichtung in Bezug auf den Zielabschnitt zum Berechnen der Parallaxe einstellt, wenn der Abgleichprozess ausgeführt wird, wobei die Größe für die Suchzielfläche, die mit einem Merkmalswert einer möglichen, entsprechenden Fläche mit Bezug auf den möglichen, entsprechenden Abschnitt verglichen wird, umso größer eingestellt wird, je größer der Abweichungsbetrag des möglichen, entsprechenden Abschnitts in Grundlinienrichtung in Bezug auf den Zielabschnitt zum Berechnen der Parallaxe ist.

2.  Bildverarbeitungsvorrichtung (102, 120) nach Anspruch 1, wobei die Parallaxenrecheneinheit (121) eine Größe der Suchzielfläche im Hinblick auf einen Abweichungsbetrag eines möglichen, entsprechenden Abschnitts in Grundlinienrichtung in Bezug auf den Zielabschnitt zum Berechnen der Parallaxe einstellt, wenn der Abgleichprozess ausgeführt wird, wobei die Größe der Suchzielfläche vergrößert wird, ohne die Anzahl der Pixel der Suchzielfläche zu verändern, je größer der Abweichungsbetrag des möglichen, entsprechenden Abschnitts in Grundlinienrichtung in Bezug auf den Zielabschnitt zum Berechnen der Parallaxe ist.

3.  Bildverarbeitungsvorrichtung (102, 120) nach Anspruch 1, wobei die Parallaxenrecheneinheit (121) eine Größe der Suchzielfläche im Hinblick auf einen Abweichungsbetrag eines möglichen, entsprechenden Abschnitts in Grundlinienrichtung in Bezug auf den Zielabschnitt zum Berechnen der Parallaxe einstellt, wenn der Abgleichprozess ausgeführt wird, wobei die Suchzielfläche durch Erhöhen der Anzahl der Pixel der Suchzielfläche eingestellt wird, je größer der Abweichungsbetrag des möglichen, entsprechenden Abschnitts in Grundlinienrichtung in Bezug auf den Zielabschnitt zum Berechnen der Parallaxe ist.

4.  Bildverarbeitungsvorrichtung (102, 120) nach Anspruch 1, wobei die Parallaxenrecheneinheit (121) eine Größe der Suchzielfläche im Hinblick auf einen Abweichungsbetrag eines möglichen, entsprechenden Abschnitts in Grundlinienrichtung in Bezug auf den Zielabschnitt zum Berechnen der Parallaxe einstellt, wenn der Abgleichprozess ausgeführt wird, wobei die Suchzielfläche durch Erhöhen einer Länge der Suchzielfläche in Grundlinienrichtung eingestellt wird, je größer der Abweichungsbetrag des möglichen, entsprechenden Abschnitts in Grundlinienrichtung in Bezug auf den Zielabschnitt zum Berechnen der Parallaxe ist.

5.  Abstandsmessvorrichtung zum Messen des Abstands zu einem Gegenstand, der in einem Zielabschnitt zum Berechnen der Parallaxe in einem Referenzbild angezeigt wird, wobei die Abstandsmessvorrichtung Folgendes umfasst:

    zwei Bildaufnahmeeinheiten (110A, 110B), die auf einer gegebenen Grundlinie auf der Basis angeordnet sind, um Bilder aufzunehmen; und
    die Bildverarbeitungsvorrichtung (102, 120) nach einem der Ansprüche 1 bis 4.

6.  Fahrzeugvorrichtungssteuersystem, das Folgendes umfasst:

    die Abstandsmessvorrichtung nach Anspruch 5, um auf der Basis von zwei aufgenommenen Bildern, die unter Verwendung von zwei Bildaufnahmeeinheiten (110A, 110B) aufgenommen werden, die auf einer gegebenen Grundlinie angeordnet sind und Bilder rund um das Fahrzeug aufnehmen können, den Abstand von einem Fahrzeug zu einem Gegenstand zu messen; und
    eine Vorrichtungssteuereinheit (106), um eine oder mehrere an dem Fahrzeug angebrachte Vorrichtungen auf der Basis eines Messergebnisses zu steuern, das unter Verwendung der Abstandsmessvorrichtung erhalten wird.

7.  Fahrzeug, das mit einer oder mit mehreren Vorrichtungen ausgerüstet ist, das Folgendes umfasst:

    das Fahrzeugvorrichtungssteuersystem nach Anspruch 6, um die eine oder die mehreren Vorrichtungen zu steuern.

8.  Computerlesbares Trägermedium, das ein Programm speichert, das, wenn es von einem Computer ausgeführt wird, den Computer veranlasst, ein Verfahren zum Berechnen der Parallaxe unter Verwendung von zwei aufgenommenen Bildern, die von zwei Bildaufnahmeeinheiten (110A, 110B) aufgenommen werden, die auf einer gegebenen Grundlinie angeordnet sind, auszuführen, wobei eines der aufgenommenen Bilder als ein Referenzbild verwendet wird und ein anderes der zwei aufgenommenen Bilder als ein Vergleichsbild verwendet wird, wobei das Verfahren die folgenden Schritte umfasst:

    Vergleichen eines ersten Merkmalswertes einer Suchzielfläche mit Bezug auf einen Zielabschnitt zum Berechnen der Parallaxe im Referenzbild und eines zweiten Merkmalswertes von jeder der möglichen, entsprechenden Flächen im Vergleichsbild, die jeweils mit mehreren möglichen, entsprechenden Abschnitten in Beziehung stehen, die auf einer epipolaren Linie vorhanden sind, die dieselbe epipolare Linie wie die des Zielabschnitts zum Berechnen der Parallaxe ist;
    Identifizieren einer möglichen, entsprechenden Fläche, die einen zweiten Merkmalswert aufweist, der mit dem ersten Merkmalswert der Suchzielfläche abgeglichen wurde, als eine entsprechende Fläche oder Identifizieren einer möglichen, entsprechenden Fläche, die einen zweiten Merkmalswert innerhalb eines gegebenen Bereichs von dem ersten Merkmalswert aufweist, als eine entsprechende Fläche, mit der ein Abgleichprozess durchführbar ist;
    **dadurch gekennzeichnet, dass** es ferner die folgenden Schritte umfasst: Berechnen eines Abweichungsbetrags zwischen dem Zielabschnitt zum Berechnen der Parallaxe und einem entsprechenden Abschnitt mit Bezug auf die entsprechende Fläche, die durch den Abgleichprozess identifiziert wurde, in Grundlinienrichtung als einen Parallaxenwert des Zielabschnitts zum Berechnen der Parallaxe; und
    Einstellen einer Größe der Suchzielfläche im Hinblick auf den Abweichungsbetrag eines möglichen, entsprechenden Abschnitts in Grundlinienrichtung in Bezug auf den Zielabschnitt zum Berechnen der Parallaxe, wobei die Größe für die Suchzielfläche, die mit einem Merkmalswert einer möglichen, entsprechenden Fläche mit Bezug auf den möglichen, entsprechenden Abschnitt verglichen wird, umso größer eingestellt wird, je größer der Abweichungsbetrag des möglichen, entsprechenden Abschnitts in Grundlinienrichtung in Bezug auf den Zielabschnitt zum Berechnen der Parallaxe ist.

9. Verfahren zum Berechnen der Parallaxe unter Verwendung zweier aufgenommener Bilder, die von zwei Bildaufnahmeeinheiten (110A, 110B) aufgenommen werden, die auf einer gegebenen Grundlinie angeordnet sind, wobei eines der zwei aufgenommenen Bilder als ein Referenzbild verwendet wird und ein anderes der zwei aufgenommenen Bilder als ein Vergleichsbild verwendet wird, wobei das Verfahren die folgenden Schritte umfasst:

Vergleichen eines ersten Merkmalswertes einer Suchzielfläche mit Bezug auf einen Zielabschnitt zum Berechnen der Parallaxe im Referenzbild und eines zweiten Merkmalswertes von jeder der möglichen, entsprechenden Flächen im Vergleichsbild, die jeweils mit mehreren möglichen, entsprechenden Abschnitten in Beziehung stehen, die auf einer epipolaren Linie vorhanden sind, die dieselbe epipolare Linie wie die des Zielabschnitts zum Berechnen der Parallaxe ist;

Identifizieren einer möglichen, entsprechenden Fläche, die einen zweiten Merkmalswert aufweist, der mit dem ersten Merkmalswert der Suchzielfläche abgeglichen wurde, als eine entsprechende Fläche oder Identifizieren einer möglichen, entsprechenden Fläche, die einen zweiten Merkmalswert innerhalb eines gegebenen Bereichs von dem ersten Merkmalswert aufweist, als eine entsprechende Fläche, mit der ein Abgleichprozess durchführbar ist;

**dadurch gekennzeichnet, dass** es ferner die folgenden Schritte umfasst: Berechnen eines Abweichungsbetrags zwischen dem Zielabschnitt zum Berechnen der Parallaxe und einem entsprechenden Abschnitt mit Bezug auf die entsprechende Fläche, die durch den Abgleichprozess identifiziert wurde, in Grundlinienrichtung als einen Parallaxenwert des Zielabschnitts zum Berechnen der Parallaxe; und

Einstellen einer Größe der Suchzielfläche im Hinblick auf den Abweichungsbetrag eines möglichen, entsprechenden Abschnitts in Grundlinienrichtung in Bezug auf den Zielabschnitt zum Berechnen der Parallaxe, wobei die Größe für die Suchzielfläche, die mit einem Merkmalswert einer möglichen, entsprechenden Fläche mit Bezug auf den möglichen, entsprechenden Abschnitt verglichen wird, umso größer eingestellt wird, je größer der Abweichungsbetrag des möglichen, entsprechenden Abschnitts in Grundlinienrichtung in Bezug auf den Zielabschnitt zum Berechnen der Parallaxe ist.

## Revendications

1. Appareil de traitement d'image (102, 120) utilisant deux images acquises par deux unités d'acquisition d'image (110A, 110B) disposées sur une ligne de base donnée, une des deux images acquises étant utilisée comme image de référence et une autre parmi les deux images acquises étant utilisée comme image de comparaison, l'appareil de traitement d'image (102, 120) comprenant :

une unité de calcul de parallaxe (121) pour mener un processus d'appariement et un processus de calcul de parallaxe,

où dans le processus d'appariement,

l'unité de calcul de parallaxe (121) compare une première valeur de caractéristique d'une zone de recherche cible associée à une partie cible pour le calcul de parallaxe dans l'image de référence, à une seconde valeur de caractéristique pour chaque zone correspondante candidate dans l'image de comparaison associée respectivement à une pluralité de zones correspondantes candidates existantes sur une ligne épipolaire qui est la même ligne épipolaire que la zone cible pour le calcul de parallaxe, et

l'unité de calcul de parallaxe (121) identifie une zone correspondante candidate comportant une seconde valeur de caractéristique appariée à la première valeur de caractéristique de la zone de cible de recherche en tant que zone correspondante ou zone correspondante candidate comportant une seconde valeur de caractéristique comprise dans une gamme donnée à partir de la première valeur de caractéristique comme zone correspondante,

où dans le processus de calcul de parallaxe,

l'unité de calcul de parallaxe (121) calcule une valeur de déviation entre la partie cible pour le calcul de parallaxe et une partie correspondante associée à la zone correspondante identifiée par le processus d'appariement le long de la direction de la ligne de base en tant que valeur de parallaxe de la partie cible pour le calcul de parallaxe, **caractérisé en ce que**

lorsque le processus d'appariement est mené, l'unité de calcul de parallaxe (121) définit une taille de la zone de cible de recherche compte tenu de la valeur de déviation d'une partie correspondante candidate le long de la direction de la ligne de base par rapport à la partie cible pour le calcul de parallaxe, où plus la valeur de déviation de la partie correspondante candidate le long de la direction de la ligne de base par rapport à la partie cible pour le calcul de parallaxe est grande, plus la taille définie pour la zone de recherche cible qui est comparée avec une valeur de caractéristique d'une zone correspondante candidate associée à la partie correspondante candidate est grande.

2. Appareil de traitement d'image (102, 120) selon la revendication 1, où lorsque le processus d'appariement est mené, l'unité de calcul de parallaxe (121) définit une taille de la zone de cible de recherche compte tenu d'une valeur de déviation d'une partie correspondante candidate le long de la direction de la ligne de base par rapport à la partie cible pour le calcul de parallaxe, où plus la quantité de déviation de la partie correspondante candidate le long de la direction de la ligne de base par rapport à la partie cible pour le calcul de parallaxe est grande, plus la taille de la zone de cible de recherche est élargie sans modifier le nombre de pixels de la zone de cible de recherche.

3. Appareil de traitement d'image (102, 120) selon la revendication 1, où lorsque le processus d'appariement est mené, l'unité de calcul de parallaxe (121) fixe une taille de la zone de cible de recherche compte tenu d'une valeur de déviation d'une partie correspondante candidate le long de la direction de la ligne de base par rapport à la partie cible pour le calcul de parallaxe, où lorsque la quantité de déviation de la partie correspondante candidate le long de la direction de la ligne de base par rapport à la partie cible pour le calcul de parallaxe augmente, la zone de cible de recherche est fixée en augmentant le nombre de pixels de la zone de cible de recherche.

4. Appareil de traitement d'image (102, 120) selon la revendication 1, où lorsque le processus d'appariement est mené, l'unité de calcul de parallaxe (121) fixe une taille de la zone de cible de recherche compte tenu de la quantité de déviation d'une partie correspondante candidate le long de la direction de la ligne de base par rapport à la partie cible pour le calcul de parallaxe, où lorsque la quantité de déviation de la partie correspondante candidate le long de la direction de la ligne de base par rapport à la partie cible pour le calcul de parallaxe augmente, la zone de cible de recherche est fixée en augmentant la longueur de la zone de cible de recherche le long de la direction de la ligne de base.

5. Appareil de mesure de distance pour mesurer la distance à un objet exposé dans la partie cible pour le calcul de parallaxe dans une image de référence, l'appareil de mesure de distance comprenant :

   deux unités d'acquisition d'image (110A, 110B) disposées sur une ligne de base donnée sur la base des images acquises ; et
   l'appareil de traitement d'image (102, 120) selon l'une quelconque des revendications 1 à4.

6. Système de commande de dispositif de véhicule comprenant :

   l'appareil de mesure de distance de la revendication 5 pour mesurer la distance à un objet à partir d'un véhicule sur la base de deux images acquises en utilisant deux unités d'acquisition d'image (110A, 110B) disposées sur une ligne de base donnée, capables d'acquérir des images autour du véhicule ; et
   une commande de dispositif (106) pour commander un ou plusieurs dispositifs montés sur le véhicule sur la base de un résultat de mesure obtenu en utilisant l'appareil de mesure de distance.

7. Véhicule sur lequel sont montés un ou plusieurs dispositifs, comprenant :

   le système de commande de dispositif de véhicule selon la revendication 6 pour commander un ou plusieurs dispositifs.

8. Support de stockage apte à être lu par ordinateur sur lequel est stocké un programme qui, lorsqu'il est exécuté par un ordinateur, permet à l'ordinateur d'exécuter le procédé de calcul de parallaxe en utilisant deux images acquises par deux unités d'acquisition d'image (110A, 110B) disposées sur une ligne de base donnée, une des deux images acquises étant utilisée comme image de référence et l'autre parmi les deux images acquises étant utilisée comme image de comparaison, le procédé comprenant les étapes consistant à :

   comparer une première valeur de caractéristique d'une zone de cible de recherche associée à une partie cible pour le calcul de parallaxe dans l'image de référence, et une seconde valeur de caractéristique pour chaque zone correspondante candidate dans l'image de comparaison associée respectivement à une pluralité de zones correspondantes candidates existantes sur une ligne épipolaire qui est la même ligne épipolaire que la zone cible pour le calcul de parallaxe ;

identifier une zone correspondante candidate comportant une seconde valeur de caractéristique appariée à la première valeur de caractéristique de la zone de cible de recherche en tant que zone correspondante, ou bien identifier une zone correspondante candidate comportant une seconde valeur de caractéristique comprise dans une gamme donnée à partir de la première valeur de caractéristique comme zone correspondante, avec laquelle un processus d'appariement peut être mené ;

**caractérisé en ce qu'**il comprend en outre les étapes consistant à :

calculer une valeur de déviation entre la partie cible pour le calcul de parallaxe et une partie correspondante, associée à la zone correspondante identifiée par le processus d'appariement le long de la direction de la ligne de base en tant que valeur de parallaxe de la partie cible pour le calcul de parallaxe ; et

déterminer une taille de la zone de cible de recherche compte tenu de la valeur de déviation d'une partie correspondante candidate le long de la direction de la ligne de base par rapport à la partie cible pour le calcul de parallaxe, où plus la valeur de déviation de la partie correspondante candidate le long de la direction de la ligne de base par rapport à la partie cible pour le calcul de parallaxe augmente, plus la taille définie de la zone de cible de recherche qui est comparée avec une valeur de caractéristique d'une zone correspondante candidate associée à la partie correspondante candidate est grande.

9. Procédé de calcul de parallaxe utilisant deux images acquises par deux unités d'acquisition d'image (110A, 110B) disposées sur une ligne de base donnée, une des deux images acquises étant utilisée comme image de référence et l'autre parmi les deux images acquises étant utilisée comme image de comparaison, le procédé comprenant les étapes consistant à :

comparer une première valeur de caractéristique d'une zone de cible de recherche associée à une partie cible pour le calcul de parallaxe dans l'image de référence, et une seconde valeur de caractéristique pour chaque zone correspondante candidate dans l'image de comparaison associée respectivement à une pluralité de zones correspondantes candidates existantes sur une ligne épipolaire qui est la même ligne épipolaire que la zone cible pour le calcul de parallaxe ;

identifier une zone correspondante candidate comportant une seconde valeur de caractéristique appariée à la première valeur de caractéristique de la zone de cible de recherche en tant que zone correspondante, ou bien identifier une zone correspondante candidate comportant une seconde valeur de caractéristique comprise dans une gamme donnée à partir de la première valeur de caractéristique comme zone correspondante, avec laquelle un processus d'appariement peut être mené ;

**caractérisé en ce qu'**il comprend en outre les étapes consistant à :

calculer une valeur de déviation entre la partie cible pour le calcul de parallaxe et une partie correspondante, associée à la zone correspondante identifiée par le processus d'appariement le long de la direction de la ligne de base en tant que valeur de parallaxe de la partie cible pour le calcul de parallaxe ; et

déterminer une taille de la zone de cible de recherche compte tenu de la quantité de déviation d'une partie correspondante candidate le long de la direction de la ligne de base par rapport à la partie cible pour le calcul de parallaxe, dans lequel plus la quantité de déviation de la partie correspondante candidate le long de la direction de la ligne de base par rapport à la partie cible pour le calcul de parallaxe augmente, plus la taille définie de la zone de cible de recherche qui est comparée avec une valeur de caractéristique d'une zone correspondante candidate associée à la partie correspondante candidate est grande.

## FIG. 1

## FIG. 2

# FIG. 3

REFERENCE IMAGE DATA          COMPARING IMAGE DATA

121

122A
| IMAGE BUFFER |

122B
| IMAGE BUFFER |

126
| WINDOW SETTING TABLE STORING UNIT |

123A
| REFERENCE WINDOW EXTRACTION UNIT |

123B
| COMPARING WINDOW EXTRACTION UNIT |

| SIMILARITY COMPUTING UNIT | 124

| PARALLAX COMPUTING UNIT | 125

PARALLAX IMAGE DATA

# FIG. 4

# FIG. 5

| DEVIATION AMOUNT d | WINDOW WIDTH w | WINDOW HEIGHT h |
|---|---|---|
| 0 | 7 | 7 |
| 1 | 7 | 7 |
| 2 | 7 | 7 |
| 3 | 7 | 7 |
| 4 | 7 | 7 |
| 5 | 7 | 9 |
| 6 | 9 | 11 |
| 7 | 11 | 15 |
| 8 | 13 | 17 |
| . . . | . . . | . . . |
| 27 | 47 | 57 |
| 28 | 49 | 61 |
| 29 | 49 | 61 |
| 30 | 51 | 65 |
| 31 | 53 | 67 |
| 32 | 55 | 69 |

# FIG. 6

```
        ┌─────────────┐
        │    START    │
        └──────┬──────┘
               │
        ┌──────▼──────────────────┐
        │ SET DEVIATION AMOUNT d = 0 │  ─ S1
        └──────┬──────────────────┘
               │
   ┌───────────┼──────────────────────┐
   │    ┌──────▼──────────────────┐    │
   │    │ OBTAIN WINDOW SETTING DATA │  ─ S2
   │    │ CORRESPONDING TO DEVIATION │
   │    │        AMOUNT d            │
   │    └──────┬──────────────────┘    │
   │           │                        │
   │    ┌──────▼──────────────────┐    │
   │    │  EXTRACT REFERENCE WINDOW │   ─ S3
   │    └──────┬──────────────────┘    │
   │           │                        │
   │    ┌──────▼──────────────────┐    │
   │    │  EXTRACT COMPARING WINDOW │   ─ S4
   │    └──────┬──────────────────┘    │
   │           │                        │
   │    ┌──────▼──────────────────┐    │
   │    │    COMPUTE AND OUTPUT     │   ─ S5
   │    │    SIMILARITY LEVEL       │
   │    └──────┬──────────────────┘    │
   │           │                        │
   │    ┌──────▼──────────────────┐    │
   │    │ SET DEVIATION AMOUNT d = d+1 │ ─ S6
   │    └──────┬──────────────────┘    │
   │           │               S7       │
   │     NO ┌──▼──────────┐            │
   └────────◄  d > dmax ?  ►            │
            └──────┬──────┘
                   │ YES
            ┌──────▼──────┐
            │     END     │
            └─────────────┘
```

23

## FIG. 7

REFERENCE IMAGE

TARGET PIXEL

REFERENCE WINDOW

COMPARING IMAGE

CORRESPONDING
CANDIDATE PIXEL

COMPARING WINDOW

## FIG. 8

# FIG. 9

# FIG. 10A

WINDOW

OBJECT AT
LONG DISTANCE

# FIG. 10B

WINDOW

OBJECT AT
SHORT DISTANCE

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000331148 A
- JP 2000 A

- JP 331148 A